# EUROPÄISCHE PATENTSCHRIFT

(11) **EP 3 097 338 B1**
(45) Veröffentlichungstag und Bekanntmachung des Hinweises auf die Patenterteilung: **18.08.2021**
(21) Anmeldenummer: 15741821.1
(22) Anmeldetag: 25.03.2015
(51) Int. Cl.: F16M 11/04, F16M 11/22, F16M 13/02

(54) **DECKENMONITORGEHÄUSE**
CASING FOR OVERHEAD MONITOR
BOÎTIER POUR MONITEUR DE PLAFOND

(30) Priorität: 09.04.2014 DE 102014206863
(43) Veröffentlichungstag der Anmeldung: 30.11.2016
(73) Patentinhaber: Siemens Mobility GmbH, 81739 München (DE)
(72) Erfinder: SCHIEFER, Benno, 40233 Düsseldorf (DE)
(86) Internationale Anmeldenummer: PCT/EP2015/056358
(87) Internationale Veröffentlichungsnummer: WO 2015/155003

(56) Entgegenhaltungen:
- EP-A1- 2 371 627
- WO-A2-2006/091933
- CA-A1- 2 633 579
- CA-A1- 2 776 515
- US-A- 5 274 938
- US-A1- 2013 036 635
- None

## Beschreibung

Die Erfindung bezieht sich auf ein Deckenmonitorgehäuse zur Unterbringung wenigstens eines Deckenmonitors und eines zu dessen Betrieb erforderlichen Steuermoduls, wobei ein Hauptkörper des Gehäuses ein durchgehendes, mehrfach abgewinkeltes Blechbiegeteil aufweist, wobei auf einer Innenseite des Blechbiegeteils freier Bauraum zur Unterbringung des Steuermoduls vorgesehen ist.

Ein solches Monitorgehäuse ist beispielsweise aus der CA-2 633 579 A1 bekannt. Der Hauptkörper des dort beschriebenen Monotorgehäuses trägt zwei einander gegenüber liegende Monitore, die jeweils an Innenseiten des Gehäuses befestigt sind. Das Gehäuse ist aus einem flachen Aluminiumblech geformt.

Bisher werden Deckenmonitorgehäuse aus teuren Strangpressprofilen in Verbindung mit separaten Abdeckblechen/-profilen hergestellt oder als aufwändige Schweißkonstruktion ausgelegt. Solche Deckenmonitorgehäuse sind beispielsweise bekannt von der spanischen RENFE-Baureihe 103 (Velaro E) oder der russischen RZD-Baureihe EWS1.

Diese bekannten Auslegungen von Deckenmonitorgehäusen führen zu hohen Fertigungs- und Montagekosten.

Ausgehend hiervon liegt der Erfindung die Aufgabe zugrunde, ein Deckenmonitorgehäuse der eingangs genannten Art derart weiterzuentwickeln, das es sich kostengünstiger fertigen und montieren lässt.

Diese Aufgabe wird bei dem Deckenmonitorgehäuse dadurch gelöst, dass der Hauptkörper des Gehäuses zur Unterbringung des Monitors eine im Querschnitt allgemein U-förmige Tasche aufweist, deren nach außen weisende Seite mit einem Sichtfenster ausgestattet ist und in die der Monitor einbringbar ist.

Eine vereinfachte Fertigung und Montage des Deckenmonitorgehäuses ergibt sich insbesondere durch die Verwendung eines durchgehenden Blechbiegeteils zur Ausbildung eines Hauptkörpers, wobei das Blechbiegeteil in einem Stück gewalzt oder gebogen sein kann. Es ergeben sich geeignete Bauräume zur Unterbringung sowohl eines Deckenmonitors als auch des zu seinem Betrieb erforderlichen Steuermoduls, und zwar durch Umformen eines einzigen Blechbiegeteils.

Bevorzugt ist der Hauptkörper des Gehäuses von dem durchgehenden, mehrfach abgewinkelten/gebogenen Blechbiegeteil gebildet und umfasst auch die U-förmige Tasche. Dies hat den Vorteil, dass allein durch Umformung des Blechbiegeteils in geeigneter Weise, sowohl die U-förmige Tasche zur Aufnahme des Deckenmonitors als auch der freie Bauraum zur Unterbringung des Steuermoduls bereitgestellt werden können.

Der Hauptkörper des Deckenmonitorgehäuses kann durch an einem Querschnitt des Hauptkörpers angepasste seitliche Abdeckungen verschlossen sein. Auf diese Weise wird ein geeigneter Staubschutz gewährleistet, wobei jedoch auch Anforderungen an eine Belüftung des Innenraums des Blechbiegeteils zu beachten sind.

Die seitlichen Abdeckungen können mit dem Hauptkörper Steckverbindungen ausbilden und in der Tasche fixiert sein. In dieser Weise ergibt sich eine einfache Montage des Deckenmonitorgehäuses.

Die seitlichen Abdeckungen können jeweils ein profiliertes oder gelochtes Blech und wenigstens einen sich an das Blech seitlich anschließenden Steg aufweisen, der für eine Steckverbindung mit der Tasche des Hauptkörpers angepasst ausgebildet ist. Aufgrund dieser Maßnahme wird eine geeignete Verbindung zwischen den seitlichen Abdeckungen und dem Hauptkörper des Deckenmonitorgehäuses hergestellt, die sich bei Bedarf auch wieder lösen lässt.

Das Deckenmonitorgehäuse kann eine Rückwand aufweisen, welche eine der U-förmigen Tasche gegenüberliegende Seite des Hauptkörpers des Gehäuses verschließt. In diesem Fall wird das Deckenmonitorgehäuse nur zur Unterbringung eines einzigen Deckenmonitors vorgesehen sein. Die Rückwand kann mit den seitlichen Abdeckungen verbunden und von diesen gehalten sein. Dadurch ergibt sich eine besonders einfache Montage der Rückwand. Diese wird noch günstiger, wenn die Rückwand und die seitlichen Abdeckungen einstückig ausgebildet sind. Dann kann eine Montage der seitlichen Abdeckungen und der Rückwand in einem Schritt erfolgen. Alternativ ist es auch möglich, dass die Rückwand aus einem Abschnitt des zum Hauptkörper gehörenden Blechbiegeteils gebildet ist.

In einem weiteren Ausführungsbeispiel kann der Hauptkörper des Gehäuses eine der U-förmigen Tasche gegenüberliegende, weitere U-förmige Tasche aufweisen und gegenüber einer mittleren Querebene des Hauptkörpers spielgelsymmetrisch ausgebildet sein. In diesem Ausführungsbeispiel ist der Hauptkörper zur Unterbringung von zwei Deckenmonitoren in den beiden zur Verfügung stehenden U-förmigen Taschen geeignet. Ein solches Deckenmonitorgehäuse wird beispielsweise in einem zentralen Deckenbereich eines Schienenfahrzeugs zum Einsatz kommen, während das zuvor erläuterte Deckenmonitorgehäuse mit gesonderter Rückwand an Innenraumenden verwendbar ist.

Bevorzugt liegen untere Abschnitte der zwei U-förmigen Taschen in einem solchen Abstand zueinander, dass sich ein Lüftungsschlitz ergibt. In diesem Falle lässt sich eine günstige Belüftung eines Innenraums des Hauptkörpers, in dem beispielsweise das Steuermodul zum Betrieb der Deckenmonitore untergebracht ist, herbeiführen.

Der Lüftungsschlitz kann vorzugsweise mit einem Lüftungsgitter ausgestattet sein, um einen übermäßigen Eintrag von Staub in den Innenraum des Hauptkörpers zu vermeiden.

Ausführungsbeispiele der Erfindung werden nachfolgend unter Bezugnahme auf die Zeichnungen noch näher erläutert. Es zeigen:
- Figur 1: eine perspektivische Ansicht einer ersten Ausführungsform eines Deckenmonitorgehäuses,
- Figur 2: eine perspektivische Ansicht eines Hauptkörpers des Deckenmonitorgehäuses von Figur 1,
- Figur 3: eine perspektivische Ansicht von seitlichen Abdeckungen des Deckenmonitorgehäuses von Figur 1,
- Figur 4: eine perspektivische Ansicht einer zweiten Ausführungsform eines Deckenmonitorgehäuses,
- Figur 5: eine perspektivische, auseinandergezogene Ansicht einer dritten Ausführungsform eines Deckenmonitorgehäuses und
- Figur 6: eine perspektivische, auseinandergezogene Ansicht einer vierten Ausführungsform eines Deckenmonitorgehäuses.

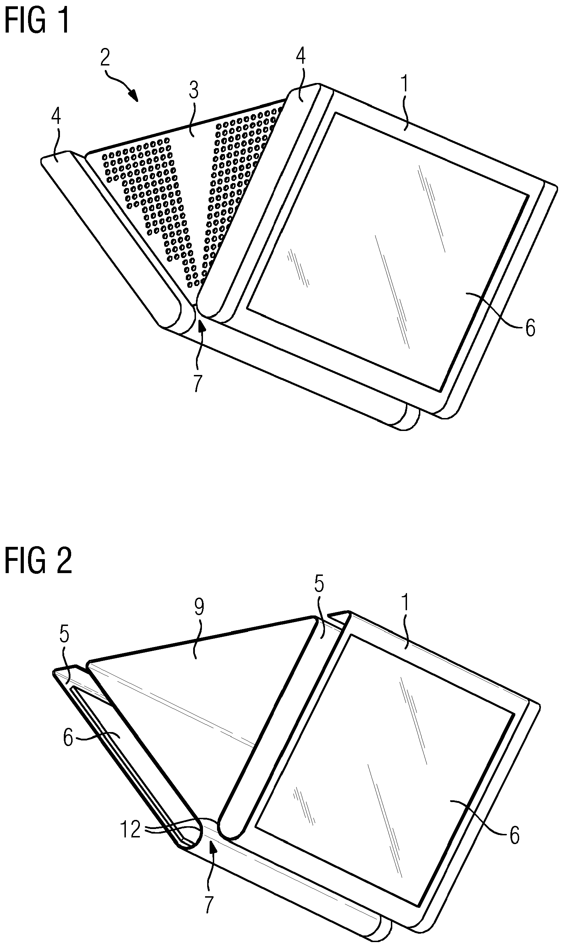

Anhand der Figuren 1 bis 3 ist eine erste Ausführungsform für einen Deckenmonitor zur Unterbringung wenigstens eines Deckenmonitors und eines zu dessen Betrieb erforderlichen Steuermoduls veranschaulicht. Aus Figur 1 geht der Gesamtaufbau des Deckenmonitorgehäuses hervor. Danach weist das Deckenmonitorgehäuse einen Hauptkörper 1 mit allgemein V-förmigem Querschnitt auf, der mit Hilfe zweier seitlicher Abdeckungen 2 verschlossen ist. Jede seitliche Abdeckung 2 zeigt ein gelochtes Blech 3, das von seiner Dimensionierung her an die Bemessung der offenen Seiten des Hauptkörpers 1 angepasst ist (vgl. Figur 2). Das gelochte Blech 3 ist einstückig mit an seinen schrägen Seiten vorgesehenen Stegen 4 ausgebildet.

Aus Figur 2 geht die äußere Form des Hauptkörpers 1 mehr im Detail hervor. Der Hauptkörper 1 weist an seinen beiden schrägen Seiten jeweils eine U-förmige Tasche 5 auf, in die ein Deckenmonitor eingebracht werden kann. Der Hauptkörper 1 ist von einem durchgehenden, mehrfach abgewinkelten Blechbiegeteil gebildet, welches an seinen Außenseiten jeweils mit einem Sichtfenster 6 ausgestattet ist. Diese jeweiligen Außenseiten bilden gleichzeitig eine Seite der jeweiligen U-förmigen Tasche 5. Die Sichtfenster 6 ermöglichen eine Betrachtung von Inhalten, die mit Hilfe von in den Taschen 5 eines untergebrachten Deckenmonitoren angezeigt werden und schützen diese zudem vor Verschmutzung.

Zwischen den beiden schräg verlaufen U-förmigen Taschen 5 ergibt sich ein freier innerer Bauraum 9 mit etwa dreieckigem Querschnitt. In diesem Bauraum 9 kann ein Steuermodul untergebracht werden, das zum Betrieb von in den Taschen 5 untergebrachten Deckenmonitoren erforderlich ist.

Untere Abschnitte 12 der U-förmigen Taschen 5 sind in einem solchen Abstand zueinander angeordnet, dass sich ein Lüftungsschlitz 7 zur Belüftung des Bauraums 9 ergibt. Es ist hervorzuheben, dass das Blechbiegeteil, welches in der Figur 2 an seiner Oberseite durchgehend gezeichnet ist, auch eine Öffnung und lediglich randseitige Stege aufweisen kann. Wesentlich ist lediglich, dass das Blechbiegeteil, welches den Hauptkörper 1 bildet, im Ergebnis die U-förmigen Taschen 5 sowie den innenliegenden Bauraum 6 bereitstellt.

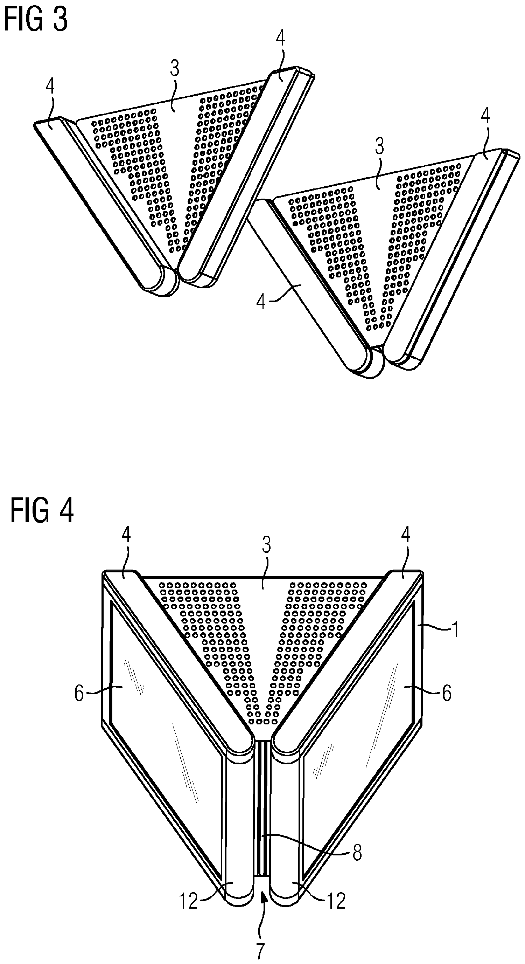

Anhand von Figur 3, welche allein die beiden seitlichen Abdeckungen 2 aus Figur 1 zeigt, wird deutlich, in welcher Weise die seitlichen Abdeckungen 2 mit dem Hauptkörper 1 verbindbar sind. Die bereits zuvor erläuterten Stege 4 sind an ihren dem Hauptkörper 1 zugewandten Seiten jeweils in der Weise abgesetzt, dass sich zwischen den Stegen 4 und den U-förmigen Taschen 5 eine Steckverbindung herstellen lässt.

Das anhand von Figur 4 veranschaulichte Ausführungsbeispiel stimmt in wesentlichen Punkten mit demjenigen von Figur 1 überein. Einziger Unterschied ist es, dass der Lüftungsschlitz 7 zusätzlich mit einem Lüftungsgitter 8 ausgestattet ist, welches u. a. einen Staubeintrag in den Bauraum 6 verringert, unbefugtes Hineingreifen verhindert und/oder Klemmrisiken vermindert.

Sämtlichen bisher erläuterten Ausführungsbeispielen ist gemeinsam, dass die Stege 4 mit ihren Oberseiten mit einer Oberseite des Blechs 3 fluchten, während sich die Stege 4 an der Unterseite des Deckenmonitorgehäuses weiter nach unten erstrecken als das Blech 3.

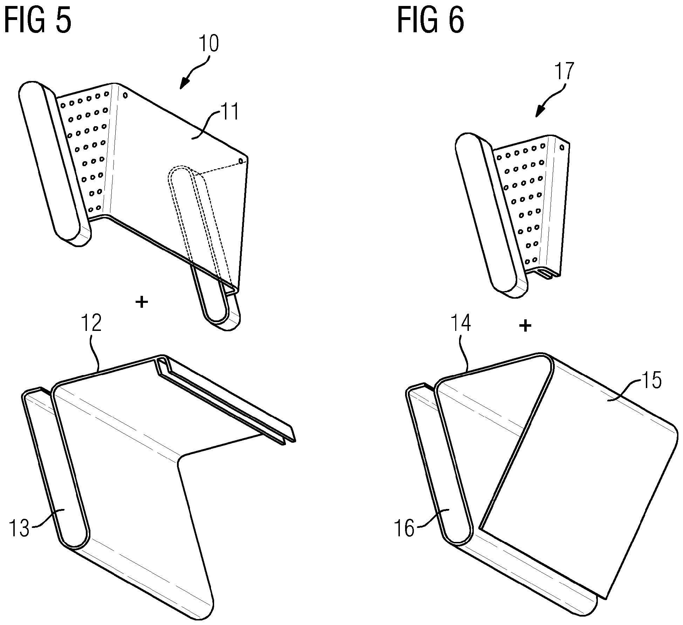

Die Figuren 5 und 6 zeigen zwei weitere Ausführungsbeispiele der Erfindung, bei denen jedoch ein Deckenmonitorgehäuse allein zur Unterbringung eines einzigen Deckenmonitors ausgebildet ist. Dabei bilden bei der Ausführungsform nach Figur 5 in der Art der seitlichen Abdeckungen 2, d. h. mit Steg und perforiertem/gelochtem Blech ausgeführte seitliche Abdeckungen 10 eine bauliche Einheit mit einer Rückwand 11. Diese Einheit läßt sich mit einem angepasst ausgebildeten und von einem Blechbiegeteil gebildeten Hauptkörper 12 in eine Steckverbindung bringen. Wiederum zeigt der Hauptkörper 12 eine Tasche 13 zur Aufnahme eines Monitors. Aus Figur 6 geht eine Ausführungsform hervor, bei der ein dort vorgesehener Hauptkörper 14, der von einem durchgehenden Blechbiegeteil gebildet ist, auch eine Rückwand 15 umfaßt, außerdem auch eine Tasche 16 zur Aufnahme eines Monitors. Seitliche Abdeckungen 17, die ebenfalls in der anhand der Figuren 1 bis 3 näher beschriebenen Art mit Steg und perforiertem/gelochtem Blech ausgeführt sind, sind dann seitlich auf den Hauptkörper aufsteckbar, auch im Bereich der Rückwand 15. Von den allgemeinen Abmessungen her entsprechen die Deckenmonitorgehäuse nach den Figuren 5,6 im wesentlichen dem Deckenmonitorgehäuse nach den Figuren 1 bis 3, und zwar geschnitten an dessen mittlere vertikaler Querebene.

## Patentansprüche

1. Deckenmonitorgehäuse zur Unterbringung wenigstens eines Deckenmonitors und eines zu dessen Betrieb erforderlichen Steuermoduls, wobei ein Hauptkörper (1) des Gehäuses ein durchgehendes, mehrfach abgewinkeltes Blechbiegeteil aufweist, wobei auf einer Innenseite des Blechbiegeteils freier Bauraum (9) zur Unterbringung des Steuermoduls vorgesehen ist,
**dadurch gekennzeichnet, dass**
der Hauptkörper zur Unterbringung des Monitors eine im Querschnitt allgemein U-förmige Tasche (5) aufweist, deren nach außen weisende Seite mit einem Sichtfenster (6) ausgestattet ist und in die der Monitor einbringbar ist.

2. Deckenmonitorgehäuse nach Anspruch 1,
**dadurch gekennzeichnet, dass**
der Hauptkörper (1) des Gehäuses von dem durchgehenden, mehrfach abgewinkelten Blechbiegeteil gebildet ist, das die U-förmige Tasche (5) umfasst.

3. Deckenmonitorgehäuse nach Anspruch 1 oder 2,
**dadurch gekennzeichnet, dass**
der Hauptkörper (1) des Deckenmonitorgehäuses durch an einen Querschnitt des Hauptkörpers (1) angepasste seitliche Abdeckungen (2) verschlossen ist.

4. Deckenmonitorgehäuse nach Anspruch 3,
**dadurch gekennzeichnet, dass**
die seitlichen Abdeckungen (2) mit dem Hauptkörper (1) Steckverbindungen ausbilden und in der Tasche (5) fixiert sind.

5. Deckenmonitorgehäuse nach einem der Ansprüche 3 oder 4,
**dadurch gekennzeichnet, dass**
die seitlichen Abdeckungen (2) jeweils ein profiliertes oder gelochtes Blech (3) und wenigstens einen sich an das Blech seitlich anschließenden Steg (4) aufweisen, der für eine Steckverbindung mit der Tasche (5) des Hauptkörpers (1) angepasst ausgebildet ist.

6. Deckenmonitorgehäuse nach einem der Ansprüche 1 bis 5,
**dadurch gekennzeichnet, dass**
es eine Rückwand (11) aufweist, welche eine der U-förmigen Tasche (5) gegenüberliegende Seite des Hauptkörpers (1) des Gehäuses verschließt.

7. Deckenmonitorgehäuse nach Anspruch 6,
**dadurch gekennzeichnet, dass**
die Rückwand (11) mit den seitlichen Abdeckungen (10) verbunden und von diesen gehalten ist.

8. Deckenmonitorgehäuse nach Anspruch 7,
**dadurch gekennzeichnet, dass**
die Rückwand (11) und die seitlichen Abdeckungen (10) einstückig ausgebildet sind.

9. Deckenmonitorgehäuse nach einem der Ansprüche 1 bis 5,
**dadurch gekennzeichnet, dass**
der Hauptkörper (1) des Gehäuses eine der U-förmigen Tasche (5) gegenüberliegende, weitere U-förmige Tasche (5) aufweist und gegenüber einer mittleren Querebene des Hauptkörpers (1) spiegelsymmetrisch ausgebildet ist.

10. Deckenmonitorgehäuse nach Anspruch 9,
**dadurch gekennzeichnet, dass**
untere Abschnitte (12) der zwei U-förmigen Taschen (5) in einem solchen Abstand zueinander liegen, dass sich ein Lüftungsschlitz (7) ergibt.

11. Deckenmonitorgehäuse nach Anspruch 10,
**dadurch gekennzeichnet, dass**
der Lüftungsschlitz (7) mit einem Lüftungsgitter (8) ausgestattet ist.

## Claims

1. Overhead monitor casing for accommodating at least one overhead monitor and a control module required for operating same, wherein a main body (1) of the casing has a continuous, multiply angled bent sheet metal part, wherein a free construction space (9) for accommodating the control module is provided on an inner side of the bent sheet metal part,
**characterized in that**
the main body for accommodating the monitor has a cross-sectionally generally U-shaped pocket (5), the outwardly facing side of which is provided with a viewing window (6) and into which the monitor can be inserted.

2. Overhead monitor casing according to Claim 1,
**characterized in that**
the main body (1) of the casing is formed by a continuous, multiply angled bent sheet metal part which comprises the U-shaped pocket (5).

3. Overhead monitor casing according to Claim 1 or 2,
**characterized in that**
the main body (1) of the overhead monitor casing is closed by lateral covers (2) which are adapted to a cross section of the main body (1).

4. Overhead monitor casing according to Claim 3,
**characterized in that**
the lateral covers (2) form plug-in connections to the main body (1) and are secured in the pocket (5).

5. Overhead monitor casing according to either of Claims 3 and 4,
**characterized in that**
the lateral covers (2) each have a profiled or perforated metal sheet (3) and at least one web (4) which laterally adjoins the metal sheet and is designed to be adapted for a plug-in connection to the pocket (5) of the main body (1).

6. Overhead monitor casing according to one of Claims 1 to 5,
**characterized in that**
it has a rear wall (11) which closes a side of the main body (1) of the casing opposite the U-shaped pocket (5).

7. Overhead monitor casing according to Claim 6,
**characterized in that**
the rear wall (11) is connected to the lateral covers (10) and is held by the latter.

8. Overhead monitor casing according to Claim 7,
**characterized in that**
the rear wall (11) and the lateral covers (10) are formed integrally.

9. Overhead monitor casing according to one of Claims 1 to 5,
**characterized in that**
the main body (1) of the casing has a further U-shaped pocket (5) opposite the U-shaped pocket (5) and is formed mirror-symmetrically with respect to a central transverse plane of the main body (1).

10. Overhead monitor casing according to Claim 9,
**characterized in that**
lower portions (12) of the two U-shaped pockets (5) are located at such a distance from each other that a ventilation slot (7) is produced.

11. Overhead monitor casing according to Claim 10,
**characterized in that**
the ventilation slot (7) is provided with a ventilation grill (8) .

## Revendications

1. Boîtier de moniteur de plafond pour le logement d'au moins un moniteur de plafond et d'un module de commande nécessaire à son fonctionnement, dans lequel un corps (1) principal du boîtier a une partie en tôle pliée continue coudée plusieurs fois, dans lequel il est prévu sur une face intérieure de la partie en tôle pliée un espace (9) de construction libre pour le logement du module de commande,
**caractérisé en ce que**
le corps principal a pour le logement du moniteur une poche (5) de section transversale d'une manière générale en forme de U, dont la face tournée vers l'extérieur est équipée d'un hublot (6) et dans laquelle le moniteur peut être mis.

2. Boîtier de moniteur de plafond suivant la revendication 1,
**caractérisé en ce que**
le corps (1) principal du boîtier est formé de la partie de tôle pliée continue coudée plusieurs fois, qui comprend la poche (5) en forme de U.

3. Boîtier de moniteur de plafond suivant la revendication 1 ou 2,
**caractérisé en ce que**
le corps (1) principal du boîtier de moniteur de plafond est fermé par des recouvrements (2) latéraux adaptés à une section transversale du corps (1) principal.

4. Boîtier de moniteur de plafond suivant la revendication 3,
**caractérisé en ce que**
les recouvrements (2) latéraux constituent avec le corps (1) principal des liaisons à enfichage et sont immobilisés dans la poche (5).

5. Boîtier de moniteur de plafond suivant l'une des revendications 3 ou 4,
**caractérisé en ce que**
les recouvrements (2) latéraux ont chacun une tôle (3) profilée ou perforée et au moins une entretoise (4) se raccordant latéralement à la tôle, qui est constituée de manière adaptée à une liaison par enfichage avec la poche (5) du corps (1) principal.

6. Boîtier de moniteur de plafond suivant l'une des revendications 1 à 5,
**caractérisé en ce que**
il a un paroi (11) arrière, qui ferme un côté, opposé à la poche (5) en forme de U, du corps (1) principal du boîtier.

7. Boîtier de moniteur de plafond suivant la revendication 6,
**caractérisé en ce que**
la paroi (11) arrière est reliée aux recouvrements (10) latéraux et est maintenue par ceux-ci.

8. Boîtier de moniteur de plafond suivant la revendication 7,
**caractérisé en ce que**
la paroi (11) arrière et les recouvrements (10) latéraux sont constitués d'une seule pièce.

9. Boîtier de moniteur de plafond suivant l'une des revendications 1 à 5,
**caractérisé en ce que**
le corps (1) principal du boîtier a une autre poche (5) en forme de U, opposée à la poche (5) en forme de U et est constitué de manière symétrique comme en un miroir par rapport à un plan transversal médian du corps (1) principal.

10. Boîtier de moniteur de plafond suivant la revendication 9,
**caractérisé en ce que**
des parties (12) inférieures des deux poches (5) en forme de U sont à une distance telle les unes des autres qu'elles donnent une fente (7) d'aération.

11. Boîtier de moniteur de plafond suivant la revendication 10,
**caractérisé en ce que**
la fente (7) d'aération est équipée d'une grille (8) d'aération.
